# EUROPEAN PATENT APPLICATION

(11) **EP 4 826 426 A1**
(43) Date of publication of application: **21.10.2026**
(21) Application number: 25181404.2
(22) Date of filing: 06.06.2025
(51) Int. Cl.: G02B 6/44

(54) **AERIAL DROP OPTICAL FIBER CABLE**

(30) Priority: 16.04.2025 IN 202511036690
(71) Applicant: HFCL Limited, New Delhi 110048 (IN)
(72) Inventor: PANDA, Jitendra Kumar, Telangana, 501359 (IN); M, Ashok Kumar, Telangana, 501359 (IN); DAS, Jyoti Prakash, Telangana, 501359 (IN); POL, Manohar, Telangana, 501359 (IN)
(74) Representative: Office Freylinger

(57) **Abstract**

The present invention provides an optical fiber cable (100) comprising: a core (102) comprising a one or more optical fibers (104); an outer sheath layer (106); and at least a strength element (108) embedded in the outer sheath layer (106). The ratio of the cross-sectional area of the optical fiber cable (100) to the cross-sectional area of the strength members (108) is in the range of 6 to 16. Each of the components comprised in the optical fiber cable (100) has independently a single break point at a breaking load of up to 2000 N.

## Description

### TECHNICAL FIELD

The present invention generally relates to optical fiber cables. In particular, the present invention relates to an aerial drop optical fiber cable with a clean break feature.

### BACKGROUND OF THE INVENTION

This section is intended to provide information relating to the field of disclosure and thus, any approach or functionality described herein should not be assumed to qualify as prior art merely by its inclusion in this section.

Aerial optical fiber cables are used in various applications such as high-speed telecommunication, in areas such as smaller towns and villages. Aerial optical fiber cables are typically suspended between pillars or poles. Conventional aerial optical fiber cables comprise outer sheaths that are made of materials such as thermoplastic polyurethane (TPU) and low-smoke zero halogen (LSZH) polymers.

Typically, when the aerial optical fiber cables are under a tensile load, the aerial optical fiber cables undergo uneven expansion, due to the different expansion coefficients of the different components of the optical fiber cable. Generally, materials such as TPU and LSZH polymer have a very high elongation range (> 150%), while other components of the optical fiber cable (such as the optical fibres) do not elongate to the same extent. Such failure may result in uneven breaking of different components of the cable. Further, some components, such as strength yarns may remain unbroken.

Further, as different components of the cable have varying tensile strength, they break at different breaking loads. Such characteristics in a cable is undesirable for the end customers.

Furthermore, conventional cables having neutral bending properties might showcase problems such as coiling issues, connector breakage, etc. Additionally, larger size diameter cables for last mile connectivity are also undesirable as they increase the drum size, are difficult to transport and also have low bending radius.

There is, therefore, a requirement in the art for an optical fiber cable that can ameliorate at least some of the limitations in the prior art.

### SUMMARY OF THE INVENTION

This section is intended to introduce one or more aspects and/or embodiments of the present disclosure in a simplified form and is not intended to identify any key advantages or features of the present disclosure.

In an aspect of the present invention, there is provided an optical fiber cable, comprising a core, said core comprising one or more optical fibers; an outer sheath layer surrounding the core; and at least a strength member embedded in the outer sheath layer, characterized in that the optical fiber cable undergoes a clean break at a predefined breaking load, wherein the predefined breaking load is in the range of 800 to 2000N.

In an aspect of the present invention, the predefined breaking load is in the range of 900 to 1300 N.

In an aspect of the present invention, the core comprises a plurality of yarn members surrounding the one or more optical fibers.

In an aspect of the present invention, the core comprises up to six yarn members, and each yarn member has a density of up to 660 DTex.

In an aspect of the present invention, the one or more optical fibers is a tight-buffered fiber.

In an aspect of the present invention, the one or more optical fibers has an outer diameter (d_{f}) in range of 400 to 900 µm.

In an aspect of the present invention, the optical fiber cable comprises a first pair of strength members and a second pair of strength members, said first pair of strength members and second pair of strength members being substantially diametrically opposite to each other.

In an aspect of the present invention, the optical fiber cable has a preferential bending direction orthogonal to a first axis between the first and second pairs of strength members.

In an aspect of the present invention, the outer sheath layer comprises HDPE.

In an aspect of the present invention, the ratio of the cross-sectional area of the optical fiber cable to the cross-sectional area of the strength members is in the range of 6 to 16.

In an aspect of the present invention, the optical fiber cable (100) has a first outer diameter (D1) and a second outer diameter (D2), wherein the first outer diameter (D1) is 3.6 ± 0.4 mm and the second outer diameter (D2) is 3.5 ± 0.5 mm, and the diameter (dₛₘ) of the strength member is 0.5 ± 0.05 mm.

In an aspect of the present invention, the optical fiber cable has a first inner diameter (d1) and a second inner diameter (d2), wherein the first inner diameter and the second inner diameter are substantially the same, or different.

In an aspect of the present invention, the ratio of the first inner diameter (d1) to the second inner diameter (d2) is ≥ 0.6 and ≤ 1.

In an aspect of the present invention, the weight of the optical fiber cable is in the range of 7 to 11 kg/km.

### BRIEF DESCRIPTION OF THE ACCOMPANYING DRAWINGS

The present disclosure, both as to its organization and manner of operation, together with further objects and advantages, may best be understood by reference to the description, taken in connection with the accompanying drawings. These and other details of the present disclosure will be described in connection with the accompanying drawings, which are furnished only by way of illustration and not in limitation of the scope of the present disclosure.
FIG. 1 illustrates a schematic sectional view of an optical fiber cable comprising a single optical fiber, according to an embodiment of the present invention;
FIG. 2 illustrates a schematic sectional view of an optical fiber cable comprising two optical fibers, according to another embodiment of the present invention; and
FIG. 3 illustrates a schematic sectional view of an optical fiber cable comprising four optical fibers, according to yet another embodiment of the present invention.

### DETAILED DESCRIPTION OF THE INVENTION

In the following description, for the purposes of explanation, various specific details are set forth in order to provide a thorough understanding of one or more embodiments of the present disclosure. It will be apparent, however, that embodiments of the present disclosure may be practiced without these specific details. Several features described hereafter may each be used independently of one another or in any combination with other features. An individual feature may not address any of the problems discussed above or may address only some of the problems discussed above. Some of the problems discussed above may not be fully addressed by any of the features described herein.

The present invention provides an optical fiber cable comprising a core, wherein the core, said core comprising one or more optical fibers. The optical fiber cable further comprises an outer sheath layer surrounding the core, and at least a strength member embedded in the outer sheath layer. The optical fiber cable undergoes a clean break at a predefined breaking load, wherein the predefined breaking load is in the range of 800 to 2000N. In a preferred embodiment, the breaking load is in the range of 900-1300N. Further, in a preferred embodiment, the optical fiber cable comprises at least a pair of strength members.

The term "clean break", as used herein, refers to when each of the components of the optical fiber cable breaks at a single predefined breaking load, i.e., the value of the breaking load at which all the components break is the same. The "clean break" may occur in response to action of a tensile load on the optical fiber cable, and in turn, on the one or more components of the optical fiber cable.

In an embodiment, the optical fiber cable comprises one optical fiber. In an embodiment, the optical fiber cable comprises two or more optical fibers. In an embodiment, the optical fiber cable comprises at least 4, 6, 8 or 12 optical fibers. In an embodiment, the plurality of optical fibers is loose optical fibers. In an embodiment, the plurality of optical fibers is bundled into one or more bundles of optical fibers. The number of optical fibers in each of the plurality of bundles may be the same or may vary. In a preferred embodiment, the optical fiber is a tight-buffered optical fiber.

In an embodiment, the diameter (d_{f}) of the optical fiber is in the range of 400 to 950 µm. In a preferred embodiment, the diameter (d_{f}) of the optical fiber is in the range of 850 to 950 µm. In a more preferred embodiment, the diameter (d_{f}) of the optical fiber is 600±50 µm.

In a preferred embodiment, the optical fiber is a single mode optical fiber. In an embodiment, the optical fiber is a multi-mode optical fiber. In an embodiment, each of the plurality of optical fibers comprised in the optical fiber cable are the same. In an embodiment, at least one of the plurality of optical fibers comprised in the optical fiber cable is different. In an embodiment, the optical fiber is compliant with at least an ITU-T standard. In a preferred embodiment, the optical fiber is G.657A2 complaint. It will be appreciated by a person skilled in the art that the disclosed optical fibers of the present invention are merely illustrative, and do not limit the scope of the present invention. A person skilled in the art would also appreciate that the present invention may encompass other optical fibers known in the art, and/or as required by different application attributes.

The outer sheath layer is the last or outermost layer of the optical fiber cable and is exposed to the environment. The cross-sectional profile of the outer sheath layer defines the cross-sectional profile of the optical fiber cable. In an embodiment, the cross-sectional profile of the outer sheath layer comprises ellipse, circle, semi-circle, polygon, or Reuleaux polygon. In preferred embodiments, the outer sheath layer has a circular or elliptical cross-sectional profile.

In an embodiment, the outer sheath layer is made of a polymeric material selected from at least one of high-density polyethylene (HDPE), low-density polyethylene (LDPE), medium-density polyethylene (MDPE), linear low-density polyethylene (LLDPE), polyamide, polypropylene, polyurethane, polyolefin, or halogen-free flame-retardant (HFFR) materials. In a preferred embodiment, the outer sheath layer is made of HDPE.

In an embodiment, the outer sheath layer comprises at least a strength member embedded in the outer sheath layer. In a preferred embodiment, at least a pair of strength members is embedded in the outer sheath layer. In a more preferred embodiment, a first pair of strength members and a second pair of strength members is embedded in the outer sheath layer. The first pair of strength members and the second pair of strength members embedded in the outer sheath layer are substantially diametrically opposite to each other.

In an embodiment, the strength members are made of at least one of fibreglass-reinforced plastic (FRP), aramid reinforced plastic (ARP) or glass reinforce plastic (GRP). In another embodiment, the strength members are made of metals, or metal alloys. An example is, without limitations, steel or any such suitable alloy.. In a preferred embodiment, the strength members are ARP rods. In an embodiment, the strength members comprise one or more coatings. In a preferred embodiment, the coating is ethylene acrylic acid (EAA). In an embodiment, the diameter (dₛₘ) of the strength member is in the range of 0.45 to 0.55 mm. In a preferred embodiment, the diameter (dₛₘ) of the strength member is 0.5 ± 0.05 mm.

In an embodiment, the core of the optical fiber cable further comprises a plurality of yarn members surrounding the one or more optical fibers. The yarn members are placed longitudinally within the outer sheath layer, to provide cushioning to the optical fibers. In an embodiment, the yarn members are selected from the group consisting of aramid, polyester, polypropylene, any other suitable materials, or any combination thereof. In a preferred embodiment the yarn members are aramid yarns. In a preferred embodiment, the optical fiber cable comprises up to six yarn members, and each yarn member has a density of up to 660DTex. In a preferred embodiment, the optical fiber cable comprises two aramid yarn members, and each aramid yarn member has a density of 220DTex.

In an embodiment, the core of the optical fiber cable further comprises at least a water blocking element. In an embodiment, the water blocking element is selected from the group consisting of water-swellable tape, water swellable yarn, water blocking powders, water blocking gel, and combinations thereof.

In an embodiment, the optical fiber cable has a first outer diameter (D1) and a second outer diameter (D2). The first outer diameter (D1) and the second outer diameter (D2) are measured along respective first and second axes, and are measured between outer surfaces of the outer sheath layer. The first axis is located between mid-points of the first and second pairs of embedded strength members. The second axis is located orthogonal to the first axis.

In an embodiment, the optical fiber cable has a first inner diameter (d1) and a second inner diameter (d2). The first inner diameter (d1) and the second inner diameter (d2) are measured along the respective first and second axes, and are measured between inner surfaces of the outer sheath layer. In an embodiment, the outer sheath layer has a first thickness (t1) along the first axis (along the first outer diameter (D1) and the first inner diameter (d1)), and a second thickness (t2) along the second axis (along the second outer diameter (D2) and the second inner diameter (d2)).

In an embodiment, the first inner diameter (d1) is the same as the second inner diameter (d2), the first thickness (t1) is the same as the second thickness (t2), and the ratio of the first inner diameter (d1) to the second inner diameter (d2) is 1. In other words, the cross-sectional profile of the optical fiber cable is substantially circular, and the cross-sectional profile of the outer sheath layer is also substantially circular.

In another embodiment, the first inner diameter (d1) is different from the second inner diameter (d2), and the first thickness (t1) is different from the second thickness (t2). In a preferred embodiment, the ratio of the first inner diameter (d1) to the second inner diameter (d2) is ≥ 0.6 and < 1. In other words, the cross-sectional profile of the optical fiber cable is elliptical, and the cross-sectional profile of the outer sheath layer is also elliptical.

In an embodiment, where the first inner diameter (d1) and the second inner diameter (d2) are not the same, the first inner diameter (d1) is 1.6 ± 0.5 mm and the second inner diameter (d2) is 1.9 ± 0.5mm. In an embodiment, the first thickness (t1) is in the range of 1 ± 0.15 mm and the second thickness (t2) is in the range of 0.85 ± 0.15 mm.

In a non-limiting implementation, where the first inner diameter (d1) is 1.6 mm, and the second inner diameter (d2) is 1.9 mm, the ratio of the first inner diameter to the second inner diameter is about 0.84. In another non-limiting implementation, where the first inner diameter (d1) is 1.3 mm, and the second inner diameter (d2) is 2.1 mm, the ratio of the first inner diameter (d1) to the second inner diameter (d2) is about 0.62. In yet another non-limiting implementation, where the first inner diameter (d1) is 2.1 mm, and the second inner diameter (d2) is 2.2 mm, the ratio of the first inner diameter (d1) to the second inner diameter (d2) is about 0.95. In still another non-limiting implementation, where the first inner diameter (d1) is 1.7 mm, and the second inner diameter (d2) is 1.8 mm, the ratio of the first inner diameter (d1) to the second inner diameter (d2) is about 0.94. In an embodiment, the weight of the optical fiber cable is in the range of 7 to 11 kg/km. In a preferred embodiment, the weight of the optical fiber cable is 10 ± 1 kg/km.

In an embodiment, the first outer diameter (D1) and the second outer diameter (D2) of the optical fiber cable are in the range of 3 to 4 mm. In a preferred embodiment, the first outer diameter (D1) is 3.6 + 0.4 mm, the second outer diameter (D2) is 3.5 ± 0.5 mm, the first inner diameter (d1) is 1.6 ± 0.5 mm and the second inner diameter (d2) is 1.9 ± 0.5 mm. Further, the optical fiber cable comprises 4 strength members (2 pairs), each strength member having a diameter (dₛₘ) of 0.5± 0.05 mm. In an embodiment, the ratio of the cross-sectional area of the sheath of optical fiber cable to the total cross-sectional area of the strength members is in the range of 6 to 16. When the optical fiber cable has an elliptical profile, the cross-sectional area (A) of the optical fiber cable can be calculated using the formula ***A*= *(π.D1.D2) - (π.d1.d2)***.

In a non-limiting implementation, where the optical cable has a first outer diameter (D1) of 3.6 mm, second outer diameter (D2) of 3.5 mm, first inner diameter (d1) of 1.6 and the second inner diameter (d2) of 1.9 mm and comprises 4 strength members (2 pairs), each strength member having a diameter (dₛₘ) of 0.5 mm, the ratio of the cross-sectional area of the optical fiber cable to the cross-sectional area of the strength members is about 9.56.

The use of HDPE as material for the outer sheath layer, and the low optical fiber cable diameter allows for the optical fiber cable to have a low weight. The optical fiber cable also possesses a higher degree of flexibility, allowing for the optical fiber cable to be rolled around smaller drums, thereby making transport and storage easier and less expensive.

In an implementation, the optical fiber cable of the present invention may be aerially installed between two fixed supports, such as poles or other similar infrastructure. As a result, the suspended or unsupported length of the optical fiber cable is subjected to the downward force of gravity. In such an implementation, the optical fiber cable profile is elliptical with the minor axis along the first inner diameter (i.e., along the first axis joining the first and second pairs of strength elements) and the major axis along the second inner diameter. Due to the increased thickness of the optical fiber cable at the region where there are strength members, the crush resistance of said region is improved. Further, the optical fiber cable has a preferential bending direction orthogonal to the plane in which the strength members are embedded. In other words, the optical fiber cable has the preferential bending direction along the second axis.

In an embodiment, each of the components of the optical fiber cable are adapted to break at a breaking load in the range of 800 to 2000N.

In an embodiment, the yarn members surrounding the one or more optical fibers and the embedded strength members are placed in a tensioned condition within the optical fiber cable. As the yarn members and the embedded strength members have different elongations, the tension parameters of both the components are adjusted such that, under a load (such as the breaking load), the elongations of the yarn members and the strength members correspond with each other, leading to a clean break of the yarn members and the strength members. In an embodiment, the tension parameter for the yarn members is set in the range of 200 to 400 g and the tension parameter for the embedded strength members is set in the range of 350 to 550 g. In a preferred embodiment, the tension parameter for the yarn members is set to be 300 ± 50 g and the tension parameter for the embedded strength members is set to be 450 ± 50 g.

In an embodiment, the embedded strength members are adapted to limit the shrinkage of the outer sheath layer.

Exemplary examples of optical fiber cables of the present invention are described below, as illustrated in various drawings, in which the same reference numerals refer to the same parts throughout the different drawings.

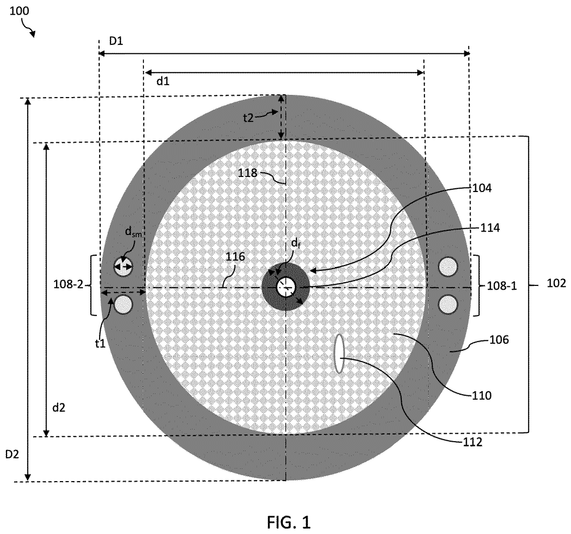

Referring to FIG. 1, the optical fiber cable 100 comprises a core 102 and an outer sheath layer 106 surrounding the core 102. The first outer diameter (D1) of the optical fiber cable 100 is 3.6 ± 0.4 mm, the second outer diameter (D2) of the optical fiber cable 100 is 3.5 ± 0.5 mm, and the weight of the optical fiber cable 100 is 7 to 11 kg/km. The core 102 comprises an optical fiber 104, which is a tight buffered optical fiber. The tight buffered optical fiber 104 has an outer diameter (d_{f}) of 0.9 ± 0.05 mm. In another embodiment, tight buffered optical fiber 104 has an outer diameter (d_{f}) of 0.6 ± 0.05 mm.

The optical fiber cable 100 comprises a first and a second pair of strength members 108-1, 108-2 embedded in the outer sheath layer 106. The first and the second pairs of strength members 108-1, 108-2 are located substantially diametrically opposite each other. The first and second pairs of strength members are located along a first axis 116. The first axis 116 is generally along the first outer diameter (D1) of the optical fiber cable 100. The first and second pair of the strength members 108-1, 108-2 are ARP rods coated with EAA. The diameter (dₛₘ) of the strength members 108 is 0.5 ± 0.05 mm. The ratio of the cross-sectional area of the optical fiber cable 100 to the cross-sectional area of the strength members 108 is in the range of 6 to 16.

The optical fiber cable 100 has a first inner diameter (d₁) and a second inner diameter (d₂), and the outer sheath layer 106 has a first thickness (t₁) and a second thickness (t₂). The first thickness is along the first inner diameter (d1) and the second thickness is along the second inner diameter (d2). The first inner diameter (d₁) and the first thickness (t₁) correspond to a region of the optical fiber cable 100 where the strength members 108 are embedded. The second inner diameter (d₂) and the second thickness (t₂) correspond to a region of the optical fiber cable 100 where no strength members 108 are present. The ratio of the first inner diameter (d₁) to the second inner diameter (d₂) is ≥ 0.6 ≤ 1.

The core 102 further comprises a plurality of yarn members 110, placed longitudinally within the outer sheath 106. The core 102 further comprises at least a water blocking element 112, placed within the outer sheath 106.

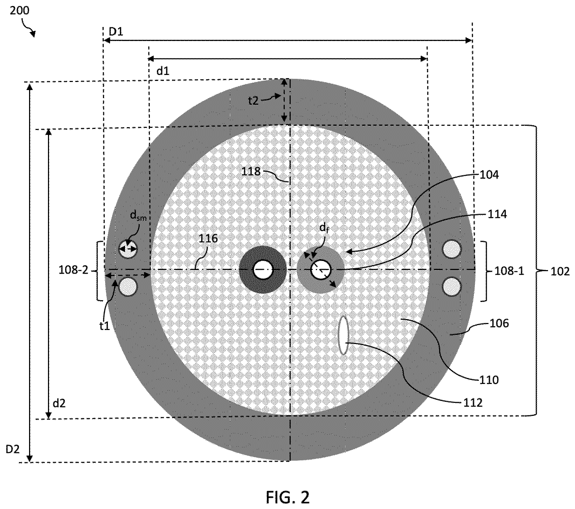

Referring to FIG. 2, there is provided an optical fiber cable 200. The optical fiber cable 200 is substantially similar to the optical fiber cable 100 of FIG. 1. Common components between the optical fiber cable 200 and the optical fiber cable 100 of FIG. 1 are referenced using the same numeral references. However, the core 102 of the optical fiber cable 200 comprises two optical fibers 104. The two optical fibers are tight-buffered optical fibers. The two tight-buffered optical fibers 104 have an outer diameter (d_{f}) of 900 ± 50 µm. In another embodiment, tight buffered optical fiber 104 has an outer diameter (d_{f}) of 600 ± 50 µm.

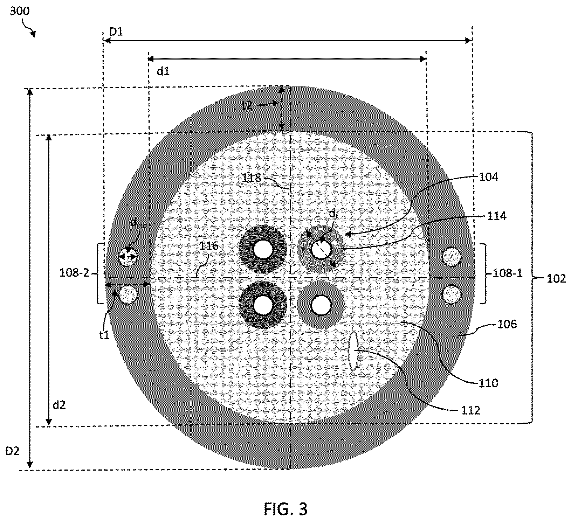

Referring to FIG. 3, there is provided an optical fiber cable 300. The optical fiber cable 300 is substantially similar to the optical fiber cable 100 of FIG. 1. Common components between the optical fiber cable 300 and the optical fiber cable 100 of FIG. 1 are referenced using the same numeral references. However, the core 102 of the optical fiber cable 300 comprises four optical fibers 104. The four optical fibers are tight-buffered optical fibers. The four tight-buffered optical fibers 104 have an outer diameter (d_{f}) of 900 ± 50 µm. In another embodiment, tight buffered optical fiber 104 has an outer diameter (d_{f}) of 600 ± 50 µm.

In an implementation of the invention, the optical fiber cable 100 is suspended between two poles (not shown). An external force may act on the optical fiber cable 100 during said implementation. The external force may a compressive force, a tensile force, a shear force, a bending force, or any combination thereof. When the external force causes the load on the optical fiber cable to reach and/or exceed the breaking load, the optical fiber cable undergoes a clean break. Further, the optical fiber cable 100 has the preferential bending direction orthogonal to the first axis 116. In other words, the preferential bending direction is along the second axis 118.

In an example application, the external force acting on the optical fiber cable 100 is substantially acting on the strength members 108 of the optical fiber cable 100, resulting in the other components of the optical fiber cable 100 being substantially isolated from the external force. When the external force causes the load on the strength members 108 to reach and/or exceed the breaking load, the strength members 108 break. Since the strength members 108 have a significantly higher mechanical strength relative to the other components of the optical fiber cable 100, a break (or failure) of the strength members 108 results in subsequent break in the other components of the optical fiber cable 100. Thus, the optical fiber cable 100 undergoes a clean break, i.e. each of the components of the optical fiber cable 100 breaks at a single predefined breaking load.

### EXAMPLES

7 samples of optical fiber cables (Samples 1 - 7) having a length in the range of 4 to 6 m were fixed to a pulling equipment. The pulling equipment comprises of a hydraulic clamp fixture to which the optical fiber cable is attached. The pulling equipment is adapted to pull the optical fiber cable and thereby simulate a load on the optical fiber cable. The load is gradually increased until the optical fiber cable breaks. A load cell measures the load applied on the sample optical fiber cable.

Samples 1 to 3 are substantially similar to the optical fiber cable 100 of FIG. 1. Samples 4 to 7 are different. Table 1 below provides constructional and breaking load details of the samples 1 to 7.

| **Sample** | **No. of Embedded Strength Members (0.55 mm ARP)** | **Number and Density of Yarn Members (Aramid)** | **Break Load (N)** | **Clean Break** |
|---|---|---|---|---|
| 1 | 4 | 2x220 dtex | 1206 | Yes |
| 2 | 4 | 2x220 dtex | 990 | Yes |
| 3 | 4 | 2x220 dtex | 1079 | Yes |
| 4 | None | 6x1670 dtex | 1098 | No |
| 5 | None | 10x1670 dtex | 1196 | No |
| 6 | None | 4x3330 dtex | 1720 | No |
| 7 | None | 8x1670 dtex | 1334 | No |

It was observed that the samples 1 to 3 underwent clean breaks at the predefined breaking load in the range of 800 to 2000 N. Specifically, the samples 1 to 3 underwent clean breaks at breaking loads of about 1206 N, 990 N, and 1079 N, respectively.

The samples 4 to 7 did not undergo clean breaks. In one instance, in sample 5, it was observed that some strength members were partially still intact. In other words, sample 5 did not undergo a clean break.

Thus, the optical fiber cable of the present invention (samples 1 to 3) showed superior clean break characteristics relative to other conventionally used optical fiber cable samples.

While the preferred embodiments of the present disclosure have been described hereinabove, it may be appreciated that various changes, adaptations, and modifications may be made therein without departing from the spirit of the disclosure and the scope of the appended claims. It will be obvious to a person skilled in the art that the present disclosure may be embodied in other specific forms without departing from its spirit or essential characteristics. The described embodiments may be considered in all respects only as illustrative and not restrictive.

### ADVANTAGES OF THE PRESENT INVENTION

The present invention provides an optical fiber cable whereby each of the various components of the optical fiber cable are adapted to break at a single predefined breaking load, thereby facilitating quicker and easier repair.

The optical fiber cable has reduced shrinkage of the outer sheath layer.

The optical fiber cable has a preferential bending direction.

The optical fiber cable can be easily rolled around a smaller drum, thereby facilitating easier and cheaper storage and transportation.

### LIST OF REFERENCE NUMERALS

- 100: Optical Fiber Cable
- 102: Core
- 104: Optical Fibers
- 106: Outer Sheath Layer
- 108: Strength Members
- 108-1: First Pair of Strength Members
- 108-2: Second Pair of Strength Members
- 110: Yarn Members
- 112: Water Blocking Element
- 114: Outermost Protective Layer
- 116: First Axis
- 118: Second Axis
- 200: Optical Fiber Cable
- 300: Optical Fiber Cable

## Claims

1. An optical fiber cable (100), comprising:
- a core (102) comprising one or more optical fibers (104);
- an outer sheath layer (106) surrounding the core (102); and
- at least a strength member (108) embedded in the outer sheath layer (106),
***characterized in that*** the optical fiber cable undergoes a clean break at a predefined breaking load, wherein the predefined breaking load is in the range of 800 to 2000 N.

2. The optical fiber cable (100) as claimed in claim 1, wherein the predefined breaking load is in the range of 900 to 1300 N.

3. The optical fiber cable (100) as claimed in claim 1, wherein the core (102) comprises a plurality of yarn members (110) surrounding the one or more optical fibers (104).

4. The optical fiber cable (100) as claimed in claim 3, wherein the core (102) comprises up to six yarn members (110), and each yarn member (110) has a density of up to 660DTex.

5. The optical fiber cable (100) as claimed in claim 1, wherein the one or more optical fibers (104) is a tight-buffered optical fiber, wherein the one or more tight-buffered optical fibers (104) has an outer diameter (d_{f}) in range of 400 to 950 µm.

6. The optical fiber cable (100) as claimed in claim 1, wherein the one or more optical fibers (104) has an outer diameter (d_{f}) in range of 400 to 950 µm.

7. The optical fiber cable (100) as claimed in claim 1, wherein the optical fiber cable (100) comprises a first pair of strength members (108-1) and a second pair of strength members (108-2), said first pair of strength members (108-1) and second pair of strength members (108-2) being substantially diametrically opposite to each other.

8. The optical fiber cable (100) as claimed in claim 7, wherein the optical fiber cable (100) has a preferential bending direction orthogonal to a first axis (116) between the first and second pairs of strength members (108-1, 108-2).

9. The optical fiber cable (100) as claimed in claim 1, wherein the outer sheath layer (106) is made of HDPE.

10. The optical fiber cable (100) as claimed in claim 7, wherein the ratio of the cross-sectional area of the optical fiber cable (100) to the cross-sectional area of the strength members (108) is in the range of 6 to 16.

11. The optical fiber cable (100) as claimed in claim 1, wherein the optical fiber cable (100) has a first outer diameter (D1) and a second outer diameter (D2), wherein the first outer diameter (D1) is 3.6 ± 0.4 mm and the second outer diameter (D2) is 3.5 ± 0.5 mm, and wherein the diameter (dₛₘ) of the strength member (108) is 0.5 ± 0.05 mm.

12. The optical fiber cable (100) as claimed in claim 1, wherein the optical fiber cable (100) has a first inner diameter (d₁) and a second inner diameter (d₂), wherein the ratio of the first inner diameter (d₁) to the second inner diameter (d₂) is ≥ 0.6 ≤ 1.

13. The optical fiber cable (100) as claimed in claim 1, wherein the weight of the optical fiber cable (100) is in the range of 7 to 11 kg/km.
